# FASCICULE DE BREVET EUROPEEN

(11) **EP 2 456 689 B1**
(45) Date de publication et mention de la délivrance du brevet: **17.04.2013**
(21) Numéro de dépôt: 10752396.1
(22) Date de dépôt: 16.07.2010
(51) Int. Cl.: B65D 85/804, A47J 31/36

(54) **DISPOSITIF POUR LA PRÉPARATION D'UNE BOISSON EXTRAITE À PARTIR D'UNE CAPSULE**
VORRICHTUNG ZUR HERSTELLUNG EINES AUS EINER KAPSEL EXTRAHIERTEN GETRÄNKS
DEVICE FOR PREPARING A BEVERAGE EXTRACTED FROM A CAPSULE

(30) Priorité: 24.07.2009 WO PCT/IB2009/053220
(43) Date de publication de la demande: 30.05.2012
(73) Titulaire: Ethical Coffee Company SA, 1700 Fribourg (CH)
(72) Inventeur: MARILLER, Alain, 1801 Le Mont-Pèlerin (CH)
(74) Mandataire: Grosfillier, Philippe
(86) Numéro de dépôt international: PCT/IB2010/053257
(87) Numéro de publication internationale: WO 2011/010263

(56) Documents cités:
- EP-A1- 1 654 966
- WO-A1-2007/122208
- WO-A1-2009/090201
- WO-A2-2007/137974

## Description

### Domaine de l'invention

La présente invention se situe dans le domaine de la préparation de boissons, p.ex. à base de café, par extraction d'une dose concentrée, p.ex. de café moulu, contenue dans une capsule. Elle se rapporte plus particulièrement aux dispositifs utilisant de telles capsules.

### Etat de la technique

Des capsules et des machines fonctionnant selon le principe précité existent depuis de nombreuses décennies.

Les brevets US 2 899 886, US 2 968 560, US 3 403 617 et US 3 607 297 décrivent des dispositifs où la capsule est initialement perforée en plusieurs endroits, puis traversée par de l'eau sous pression.

La capsule décrite dans le brevet CH 605 293 ou dans le brevet EP 0 242 556 B1 comporte une membrane dans sa partie inférieure. De l'eau sous pression est initialement introduite dans la partie supérieure de la capsule, ce qui entraîne un gonflement de la capsule, principalement au niveau de la membrane. A partir d'une certaine pression, la membrane se déchire, autorisant de la sorte l'écoulement d'un mélange eau-café.

D'autres capsules munies d'une membrane sont décrites dans les documents brevets suivants : EP 0 468 079 A, EP 0 806 373 A, EP 0 554 469 A, EP 1 654 966 A.

### Exposé général de l'invention

La présente invention vise notamment à améliorer l'étanchéité des dispositifs destinés à extraire du café à partir de capsules dotées d'un renflement d'étanchéité dans leur partie inférieure.

L'invention a donc comme objet un dispositif pour la préparation d'une boisson extraite à partir d'une capsule dotée d'un renflement d'étanchéité dans la partie inférieure de sa paroi latérale, dispositif comprenant un support de capsule et une cage à capsule à l'intérieur de laquelle sont disposés au moins une entrée d'eau et des moyens de perçage de capsule, caractérisé par le fait que l'extrémité inférieure de la face interne de ladite cage comporte un évidement annulaire dimensionné de manière à ce qu'au moins une partie de sa face interne assure un contact étanche avec ledit renflement d'étanchéité.

L'étanchéité est améliorée en fixant un joint d'étanchéité dans l'évidement.

Selon un mode de réalisation de l'invention, le joint d'étanchéité comprend une partie mobile dont l'extrémité libre est adaptée pour assurer un contact étanche avec ledit renflement d'étanchéité.

Afin de soutenir le joint d'étanchéité, l'évidement peut comporter en outre une bague de support, disposée de préférence sous le joint d'étanchéité.

Dans une variante de l'invention, la bague comporte au moins un trou disposé de manière à assurer un écoulement de liquide.

### Exposé détaillé de l'invention

L'invention est décrite plus en détail ci-après au moyen d'exemples non limitatifs illustrés par les figures suivantes :
Les figures 1 à 4 illustrent un mode de réalisation de l'invention.
Les figures 5 à 8 présentent une comparaison entre l'utilisation d'une capsule avec un renflement d'étanchéité et une capsule dépourvue d'un tel renflement.
Les figures 9 à 18 illustrent une autre variante de l'invention dans laquelle le joint d'étanchéité est supporté par une bague.

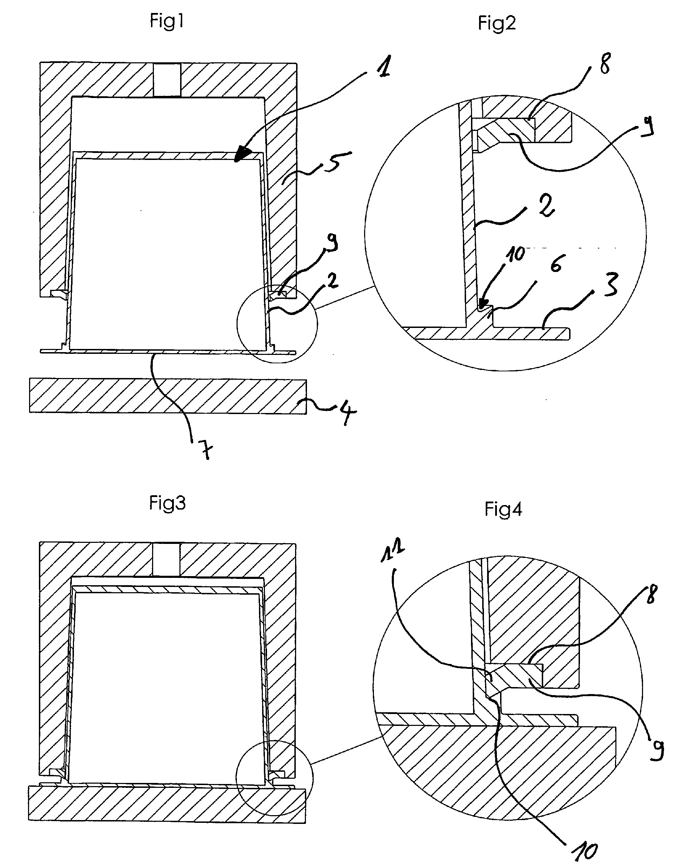

La figure 1 présente une capsule 1 , dotée d'une face inférieure d'extraction 7, qui est disposée dans un ensemble constitué d'un support de capsule 4 et d'une cage de capsule 5. La paroi latérale 2 de la capsule 1 comporte dans sa partie inférieure un renflement d'étanchéité 6 en forme de gouttière 10. Plus précisément, le renflement 6 se situe vers l'intersection des plans définis par la paroi latérale 2 et la collerette 3 de la capsule 1.

Comme on peut le voir également sur la figure 2, la face interne de la paroi de la cage 5 comporte un évidement annulaire 8.

Selon un mode de réalisation non couvert par l'invention et non illustré, l'évidement 8 est dépourvu d'élément d'étanchéité. Sa face interne est simplement configurée de manière à assurer une étanchéité avec le renflement 6.

Une étanchéité peut être obtenue en mettant exclusivement en contact la face horizontale de l'évidement 8 avec la face supérieure du renflement 6.

Il est également possible de doter l'évidement 8 d'une géométrie qui se conforme exactement à la géométrie du renflement 6, à l'instar de la géométrie d'un objet moulé et de la géométrie de son moule.

L'évidement illustré sur les figures 1 à 14 comporte un joint d'étanchéité 9 . Ce dernier comprend une partie mobile 11 dont l'extrémité libre est conformée de manière à se loger dans la gouttière 10 du renflement 6 (voir p.ex. les figures 3 et 4).

Lorsque du liquide s'écoule entre la paroi latérale 2 de la capsule 1 et la paroi interne de la cage 5, une pression s'exerce sur la face supérieure de la partie mobile 11, forçant cette dernière à se loger dans la gouttière 10 de la capsule 1. L'étanchéité au niveau du renflement 6 est donc renforcée.

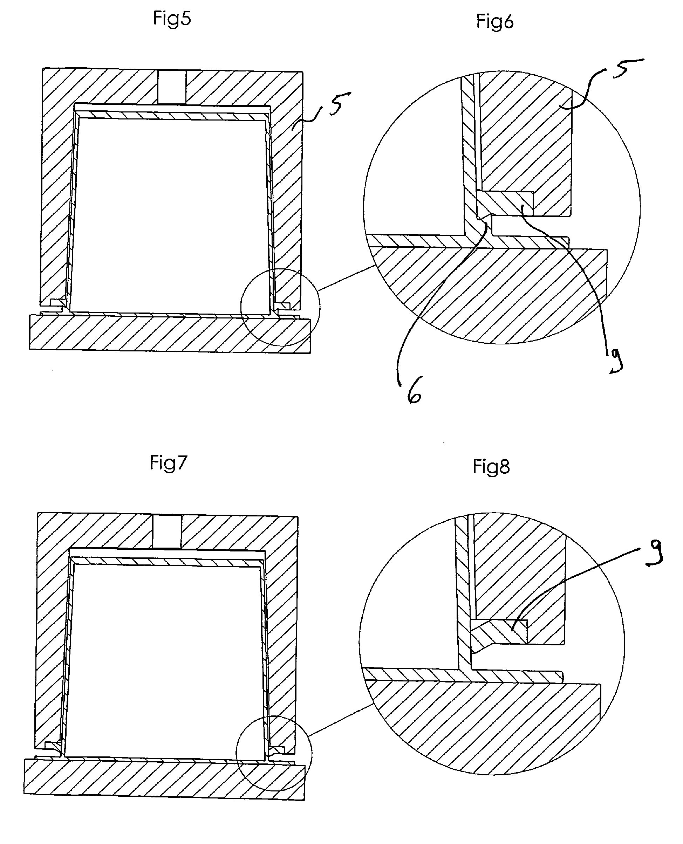

Si la capsule 1 ne comporte pas de renflement (voir figures 7 et 8), le joint d'étanchéité 9 ne retient pas le liquide. Dans ce cas l'étanchéité n'est donc pas assurée.

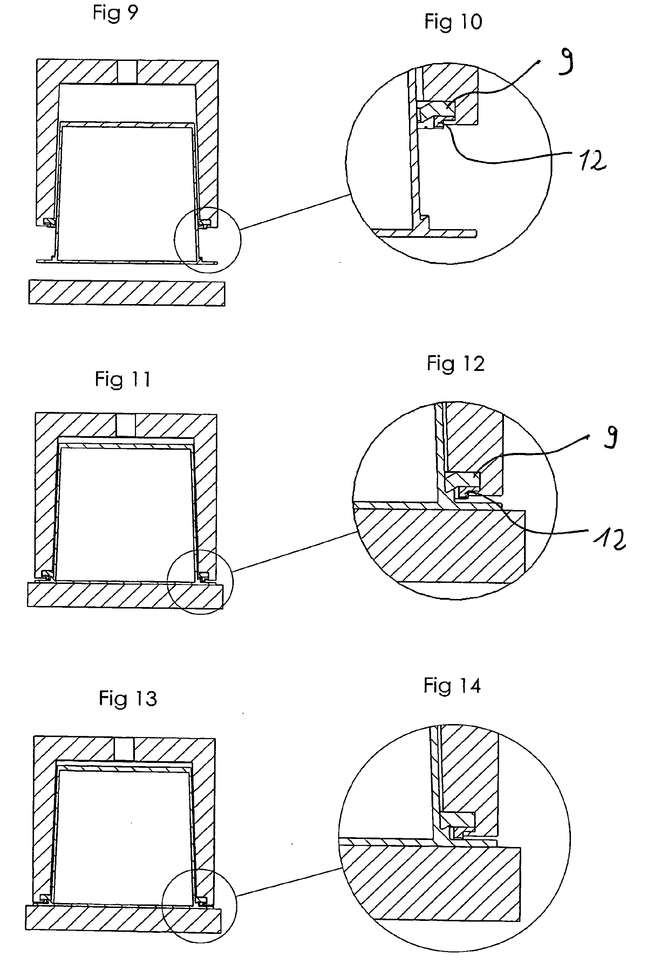

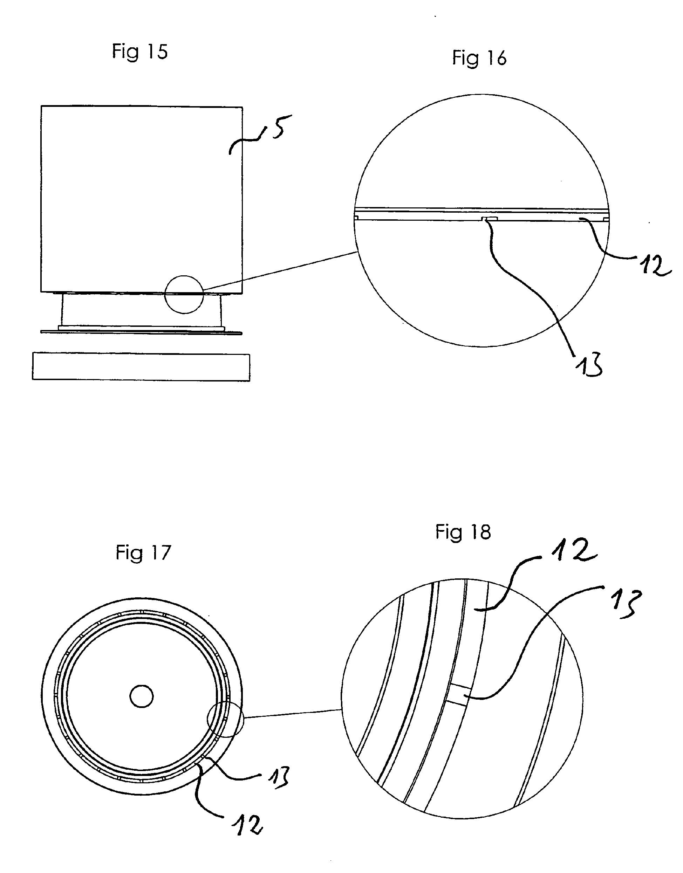

Afin d'améliorer l'efficacité du joint d'étanchéité 9 en présence d'une capsule 1 dotée d'un renflement 6, on peut disposer une bague de soutien 12 comme illustré sur les figures 9 à 18.

Comme on peut le voir en particulier sur la figure 14, la bague 12 s'appuie sur la collerette 3 de la capsule 1, ce qui renforce le maintien du joint d'étanchéité 9 dans l'évidement 8.

Afin de limiter l'usage du dispositif selon l'invention à des capsules comportant un renflement d'étanchéité 6, la bague 12 comporte une série de trous 13 . Ceux-ci sont disposés de manière à laisser le liquide s'écouler à travers la bague 13. De la sorte, la bague 12 ne peut agir comme joint d'étanchéité pour des capsules dépourvues d'un renflement d'étanchéité 6.

Il va de soi que l'invention ne limite aux exemples illustrés dans les figures.

## Revendications

1. Dispositif pour la préparation d'une boisson extraite à partir d'une capsule (1) dotée d'un renflement d'étanchéité (6) dans la partie inférieure de sa paroi latérale (2), dispositif comprenant un support de capsule (4) et une cage à capsule (5) à l'intérieur de laquelle sont disposés au moins une entrée d'eau et des moyens de perçage de capsule, l'extrémité inférieure de la face interne de ladite cage (5) comportant un évidement annulaire (8) dimensionné de manière à ce qu'au moins une partie de sa face interne assure un contact étanche avec ledit renflement d'étanchéité (6), **caractérisé par le fait que** l'évidement (8) comporte un joint d'étanchéité (9).

2. Dispositif selon la revendication 1 dans lequel le joint d'étanchéité (9) comprend une partie mobile (11) dont l'extrémité libre est adaptée pour assurer un contact étanche avec ledit renflement d'étanchéité (6).

3. Dispositif selon la revendication 1 ou 2 dans lequel l'évidement (8) comporte en outre une bague de support (12) destinée à supporter ledit joint (9).

4. Dispositif selon la revendication 3 dans lequel ladite bague (12) comporte au moins un trou (13) disposé de manière à assurer un écoulement de liquide.

## Claims

1. Device for preparing a drink extracted from a capsule (1) provided with a sealing bulge (6) in the lower part of its side wall (2), the device comprising a capsule support (4) and a capsule cage (5) inside which there are at least a water inlet and capsule-piercing means, the lower end of the internal face of said cage (5) comprising an annular recess (8) sized so that at least part of its internal face comes into sealed contact with said sealing bulge (6), **characterized in that** the recess (8) comprises a seal (9).

2. Device according to Claim 1, in which the seal (9) comprises a moving part (11) the free end of which is designed to come into sealed contact with said sealing bulge (6).

3. Device according to Claim 1 or 2, in which the recess (8) further comprises a backing ring (12) intended to support said seal (9).

4. Device according to Claim 3, in which said ring (12) comprises at least one hole (13) positioned to allow liquid to flow.

## Patentansprüche

1. Vorrichtung für die Zubereitung eines Getränks, das ausgehend von einer Kapsel (1), die mit einer Abdichtwölbung (6) in dem unteren Teil ihrer seitlichen Wand (2) versehen ist, extrahiert wird, wobei die Vorrichtung einen Kapselhalter (4) und einen Kapselkäfig (5) aufweist, in dessen Inneren wenigstens ein Wassereingang und Kapseldurchbohrungsmittel angeordnet sind, wobei das untere Ende der internen Seite des Käfigs (5) eine ringförmige Aussparung (8) aufweist, die derart bemessen ist, dass wenigstens ein Teil ihrer internen Seite eine dichte Berührung mit der Abdichtwölbung (6) sicherstellt, **dadurch gekennzeichnet, dass** die Aussparung (8) eine Dichtung (9) aufweist.

2. Vorrichtung nach Anspruch 1, bei der die Dichtung (9) einen beweglichen Teil (11) aufweist, dessen freies Ende angepasst ist, um einen dichten Kontakt mit der Abdichtwölbung (6) sicherzustellen.

3. Vorrichtung nach Anspruch 1 oder 2, bei der die Aussparung (8) ferner einen Stützring (12) aufweist, der dazu bestimmt ist, die Dichtung (9) zu stützen.

4. Vorrichtung nach Anspruch 3, bei der der Ring (12) wenigstens ein Loch (13) aufweist, das derart angeordnet ist, dass es ein Flüssigkeitsabfließen sicherstellt.
